# FASCICULE DE BREVET EUROPEEN

(11) **EP 3 164 320 B1**
(45) Date de publication et mention de la délivrance du brevet: **12.09.2018**
(21) Numéro de dépôt: 15742372.4
(22) Date de dépôt: 06.07.2015
(51) Int. Cl.: B62D 24/02, B62D 27/06, F16B 5/02

(54) **VÉHICULE AUTOMOBILE COMPRENANT DES DISPOSITIFS DE FIXATION D'UNE CARROSSERIE DE VÉHICULE SUR UN CHÂSSIS DE VÉHICULE**
KRAFTFAHRZEUG MIT VORRICHTUNGEN ZUR BEFESTIGUNG EINER FAHRZEUGKAROSSERIE AUF EINEM FAHRGESTELL
MOTOR VEHICLE COMPRISING DEVICES FOR ATTACHMENT OF A VEHICLE BODY ON A VEHICLE CHASSIS

(30) Priorité: 18.08.2014 FR 1457851
(43) Date de publication de la demande: 10.05.2017
(73) Titulaire: Renault S.A.S., 92100 Boulogne-Billancourt (FR)
(72) Inventeur: BASKAR, Venkatesh Prabu, Chennai 600127 (IN); SWAMY, Nirmal, Chennai 45 (IN)
(86) Numéro de dépôt international: PCT/FR2015/051863
(87) Numéro de publication internationale: WO 2016/001612

(56) Documents cités:
- EP-A1- 0 584 576
- EP-A1- 0 987 449
- US-A- 3 881 767
- US-A1- 2005 134 069

## Description

La présente invention concerne les véhicules automobiles, en particulier des dispositifs pour connecter deux pièces mécaniques d'un véhicule à moteur par vissage depuis l'extérieur du véhicule.

Plus particulièrement, l'invention concerne des dispositifs pour fixer une carrosserie du véhicule sur la structure dudit véhicule, comme le soubassement de carrosserie ou le châssis d'un véhicule à moteur.

De manière conventionnelle, un châssis comprend tous les composants mécaniques, électriques et structurels nécessaires pour un véhicule automobile pleinement fonctionnel, y compris une infrastructure de carrosserie ou structure et au moins un système de conversion d'énergie, une suspension, des roues, des systèmes de direction et de freinage supportés par l'infrastructure de carrosserie. L'infrastructure de carrosserie ou structure du véhicule a une interface avec des dispositifs de connexion auxquels peuvent être fixés des éléments de carrosserie.

En général, une modification du dessin de la carrosserie nécessite une modification de la liaison mécanique entre la carrosserie et le châssis.

La demande de brevet américain US 7 275 609 décrit un système de connexion de carrosserie de véhicule pour fixer de façon automatique une carrosserie de véhicule sur un châssis de véhicule. Toutefois, l'utilisation d'un système de connexion de carrosserie automatisé nécessite un système de commande sophistiqué qui est particulièrement difficile à installer sur l'infrastructure du véhicule et qui implique des coûts additionnels. De plus, le système de connexion de carrosserie automatisé n'est pas adapté pour rigidifier l'infrastructure du véhicule en cas de collision.

La demande de brevet EP 0 390 751 décrit un dispositif pour fixer le plancher d'une caisse de véhicule à moteur comprenant une pièce mécanique fixée au plancher par le dessous, le plancher comportant un trou permettant le vissage par le dessus.

La demande de brevet FR 2 984 237 décrit un dispositif de fixation pour fixer un châssis sur une caisse d'un véhicule à moteur électrique comprenant un centreur mâle, qui est soudé à la caisse, et un centreur femelle soudé sur le châssis et monté coaxialement autour du centreur mâle. Le centreur mâle présente un filetage interne qui coopère avec le filetage d'une vis.

La demande de brevet EP 0 455 888 décrit un dispositif pour connecter des pièces mécaniques à la caisse d'un véhicule à moteur comprenant une pièce mâle comportant un trou traversant pour une vis et une pièce femelle comportant une première partie entourant la surface extérieure de la pièce mâle et une deuxième partie ayant un filetage interne pour permettre le vissage de la vis.
Le document US 2005/134069 A1 décrit un véhicule automobile selon le préambule de la revendication 1. Toutefois, l'utilisation de pièces mâle et femelle conçues pour s'accoupler l'une à l'autre conduit à un positionnement compliqué des pièces à connecter et nécessite un usinage précis pour accoupler les pièces mâle et femelle entre elles.

En outre, les solutions proposées ne permettent pas le transfert d'une charge d'une pièce à l'autre en cas de collision avec un élément extérieur.

Un but de la présente invention est donc de répondre aux problèmes susmentionnés.

Le but de la présente invention est de fournir un dispositif pour connecter facilement une interface simplifiée et standardisée d'une infrastructure de carrosserie de véhicule ou structure à des carrosseries de conceptions substantiellement variées.

Un autre but de la présente invention est de fournir un dispositif qui permette un transfert de charge régulier de la structure à la carrosserie du véhicule en cas de collision frontale et/ou latérale en évitant la compression des panneaux, tout en étant économique.

Un autre but de la présente invention est de fournir un dispositif de fixation ayant une fonction de positionnement tridimensionnel de la carrosserie par rapport à la structure du véhicule.

Un objet particulier de la présente invention est de proposer un véhicule automobile comprenant un châssis, une carrosserie, une pluralité de premiers dispositifs de fixation verticaux, s'étendant dans une direction verticale perpendiculaire à la direction longitudinale du véhicule, pour connecter la carrosserie au châssis sur les côtés du véhicule, une pluralité de deuxièmes dispositifs de fixation verticaux, s'étendant dans une direction verticale perpendiculaire à la direction longitudinale du véhicule, pour connecter la carrosserie au châssis à l'arrière du véhicule et une pluralité de dispositifs de fixation longitudinaux, s'étendant dans la direction longitudinale du véhicule, pour connecter la carrosserie au châssis à l'avant du véhicule.

Dans un mode de réalisation, chaque dispositif de fixation comprend une vis ayant une tête de vis adaptée pour reposer sur le châssis, un écrou coopérant avec la vis et adapté pour reposer sur la carrosserie et un manchon cylindrique creux à l'intérieur duquel est insérée la vis et situé entre la tête de vis et l'écrou.

Dans un mode de réalisation, au moins une extrémité du manchon cylindrique creux est fixée au châssis du véhicule, par exemple par une soudure de manchon.

Dans un mode de réalisation, l'écrou est fixé à la carrosserie, par exemple par une soudure d'écrou.

Dans un mode de réalisation, le châssis du véhicule comprend un panneau de plancher central s'étendant dans la direction longitudinale du véhicule et délimité par deux longerons latéraux et des traverses avant et arrière s'étendant transversalement entre les longerons et un panneau avant de plancher central s'étendant depuis le panneau de plancher central dans une direction substantiellement inclinée.

Dans un mode de réalisation, le manchon cylindrique de chaque premier dispositif de fixation vertical est placé à l'intérieur de chaque longeron latéral du châssis.

Dans un mode de réalisation, le manchon cylindrique de chaque deuxième dispositif de fixation vertical est placé à l'intérieur de chaque traverse arrière du châssis.

Dans un mode de réalisation, le manchon cylindrique de chaque dispositif de fixation longitudinal est placé à l'intérieur du panneau avant de plancher central du châssis.

Le véhicule automobile peut comprendre un élément d'étanchéité placé entre la carrosserie et le châssis.

Les manchons cylindriques sont par exemple faits d'un matériau métallique.

La présente invention sera mieux comprise à la lecture de la description détaillée d'un nombre de modes de réalisation considérés entièrement à titre d'exemples non limitatifs et illustrés par les dessins annexés, dans lesquels :
- la figure 1 montre une vue en perspective d'un châssis et d'une carrosserie d'un véhicule à moteur comprenant des dispositifs de fixation selon la présente invention ;
- la figure 2 représente une vue détaillée II-II de la figure 1 ;
- la figure 3 représente une vue détaillée III-III de la figure 1 ; et
- la figure 4 représente une vue détaillée IV-IV de la figure 1.

Dans la description qui suit, les termes "longitudinal", "transversal", "vertical", "avant", "arrière", "gauche" et "droit" sont définis selon le repère orthogonal habituel des véhicules à moteur, illustré sur les figures, et comprenant :
- un axe longitudinal X, horizontal et orienté de l'avant vers l'arrière du véhicule ;
- un axe transversal Y, horizontal, perpendiculaire à l'axe longitudinal X et orienté de la gauche à la droite du véhicule quand le véhicule se déplace en avant ;
- un axe vertical Z, orthogonal à l'axe longitudinal X et à l'axe transversal Y.

Comme illustré sur les figures, une partie d'un véhicule automobile 10 comprend une infrastructure de carrosserie ou châssis 20, une carrosserie 30 et une pluralité de dispositifs de fixation 40, 50, 60 pour fixer la carrosserie 30 sur le châssis 20 du véhicule 10. Les dispositifs de fixation 40, 50, 60 sont des systèmes de connexion de caisse mécaniques adaptés pour fixer une carrosserie sur un châssis de véhicule standardisé.

Le châssis ou infrastructure de carrosserie 20 est la structure du châssis d'un véhicule automobile qui supporte la carrosserie et les composants mécaniques comme le moteur, la transmission et l'unité de commande (non représentée), ainsi que les composants électriques (non représentés).

Comme montré, le châssis 20 du véhicule comprend un ensemble de plancher comportant un panneau de plancher central 21 qui s'étend dans la direction longitudinale X du véhicule et un panneau avant de plancher central 22 qui s'étend depuis le panneau de plancher central 21 dans une direction substantiellement inclinée.

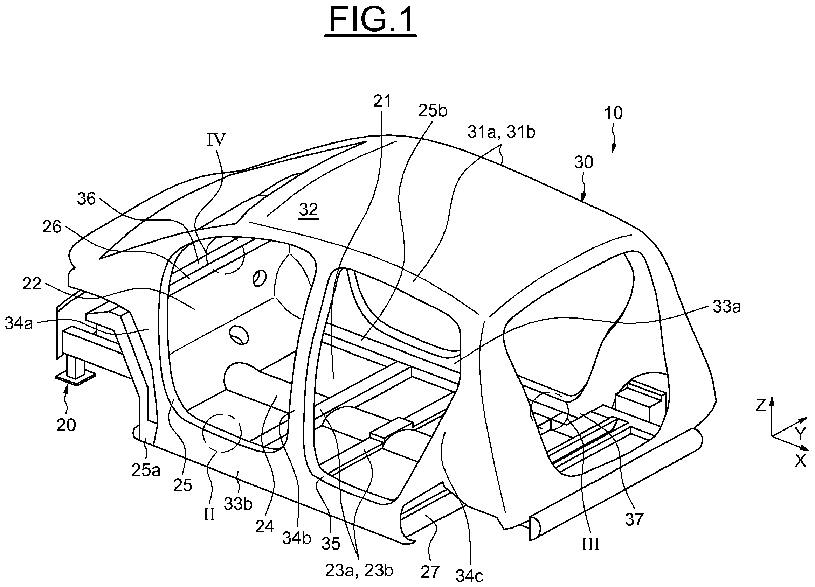

Comme représenté sur la figure 1, le panneau de plancher central 21 comprend des supports de sièges transversaux avant et arrière 23a, 23b pour maintenir des points de fixation des sièges du véhicule et un élément de renforcement longitudinal 24 qui s'étend dans la direction longitudinale X du véhicule, substantiellement au milieu du panneau de plancher central 21.

Le panneau de plancher central 21 est substantiellement plat et est délimité par deux longerons latéraux 25a, 25b et des traverses avant et arrière 26, 27 s'étendant transversalement entre les longerons 25a, 25b.

Les longerons et traverses 25a, 25b, 26, 27 sont creux et peuvent être faits de feuilles de métal estampé connectées au panneau de plancher central 21, par exemple par soudage.

Comme représenté sur la figure 1, la carrosserie 30 est un corps creux qui comprend deux poutres longitudinales latérales supérieures 31a, 31b supportant le toit 32 du véhicule, deux poutres longitudinales latérales inférieures 33a, 33b et des montants substantiellement longitudinaux, comme un montant avant 34a, un montant central 34b et un montant arrière 34c s'étendant entre les poutres supérieures et inférieures 31a, 31b et 33a, 33b et délimitant des ouvertures de portes 35. Un montant est un support vertical des zones d'ouverture de porte du véhicule automobile.

La carrosserie 30 comprend en outre une paroi avant 36 qui s'étend dans une direction substantiellement verticale Z depuis le panneau avant de plancher central 22 du châssis 20 et une paroi arrière 37 qui s'étend dans une direction substantiellement longitudinale X à l'arrière du véhicule, séparant le coffre de l'habitacle du véhicule, dans le cas d'un véhicule à traction.

Le panneau avant de plancher central 22 et la paroi avant 36 forment ensemble un panneau de caisse avant ou un tablier séparant le compartiment moteur de l'habitacle du véhicule, dans le cas d'un véhicule à traction.

Les panneaux avant 21, 22, 36, 37 sont faits de feuilles de métal estampé ou de pièces métalliques extrudées.

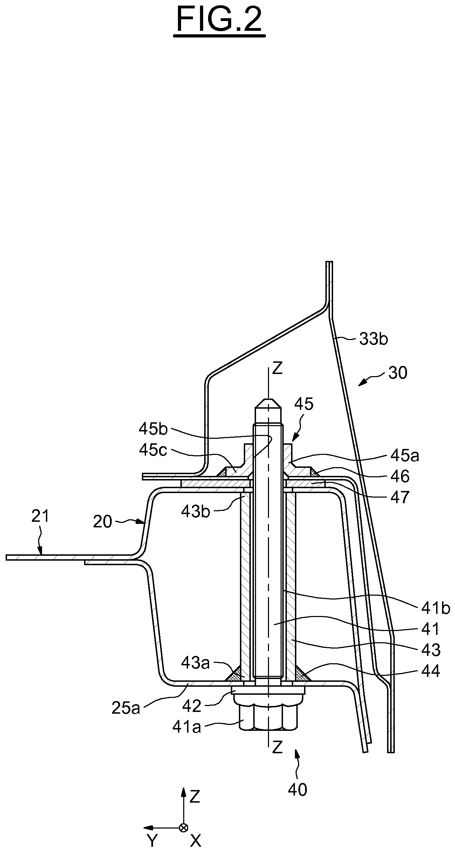

Comme représenté sur la figure 2, la vue détaillée montre une vue en coupe devant le montant central 34b représenté sur la figure 1.

Une pluralité de premiers dispositifs de fixation verticaux 40 représentés sur la figure 2 s'étend dans la direction verticale Z. Ceux-ci comprennent chacun une vis 41 ayant une tête 41a et un filetage externe 41b sur sa surface cylindrique. La vis 41 est insérée dans des trous (non référencés) pratiqués sur la poutre inférieure 33b de la carrosserie 30 et sur le longeron latéral 25a du châssis 20 de telle manière que la tête de vis repose sur le plancher central 21 via une rondelle annulaire 42.

Chaque premier dispositif de fixation vertical 40 comprend en outre un manchon cylindrique creux 43 ayant un diamètre intérieur supérieur au diamètre extérieur de la vis 41. Le manchon cylindrique 43 est situé à l'intérieur du longeron latéral 25a et comprend une première extrémité 43a, soudée par une soudure de manchon 44 sur la bride inférieure du longeron latéral 25a et une deuxième extrémité 43b, opposée à la première extrémité 43a, en contact axial avec le plancher central 21.

Chaque premier dispositif de fixation vertical 40 comprend en outre un écrou 45 ayant un corps cylindrique 45a qui s'étend dans la direction verticale Z et une jupe annulaire 45b qui s'étend dans une direction Y perpendiculaire à la direction Z du corps cylindrique 45a. La jupe annulaire 45b est soudée par une soudure d'écrou 46 sur la carrosserie 30. L'alésage interne 45c de l'écrou est fileté afin de coopérer avec les filets 41b de la vis 41. Comme représenté, un élément d'étanchéité 47, par exemple en matériau élastique comme du caoutchouc, est placé entre la carrosserie 30 et le châssis 20. Les premiers dispositifs de fixation verticaux 40 agissent comme un moyen de positionnement du châssis par rapport à la carrosserie 30 dans la direction verticale Z sur les côtés du véhicule.

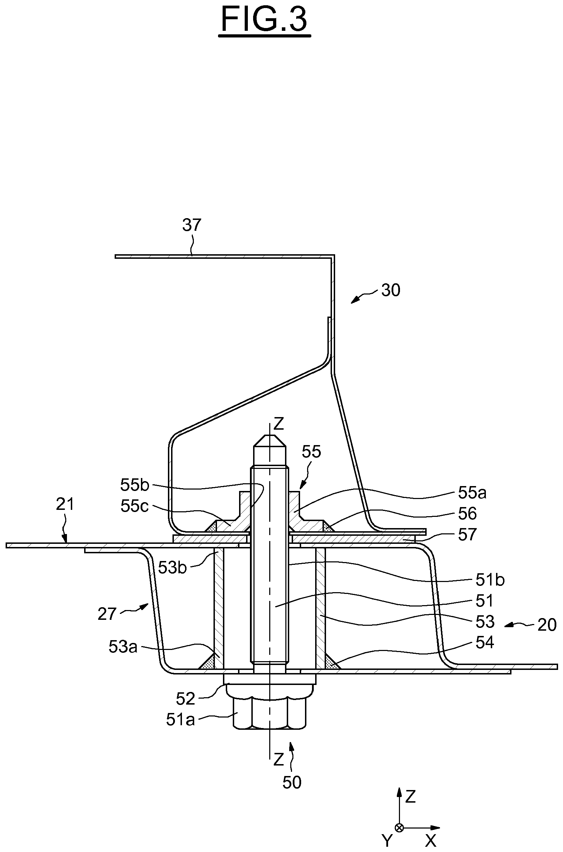

Comme illustré sur la figure 3, la vue détaillée montre une vue en coupe devant la paroi de plancher arrière 37 montrée sur la figure 1.

Une pluralité de deuxièmes dispositifs de fixation verticaux 50 représentés sur la figure 3 s'étendent dans la direction verticale Z-Z et comprennent chacun une vis 51 ayant une tête 51a et un filetage externe 51b sur sa surface cylindrique. La vis 51 est insérée dans des trous (non référencés) pratiqués dans la paroi arrière 37 de la carrosserie 30 et dans la traverse arrière 27 du châssis 20 de telle manière que la tête de vis 51a repose sur le plancher central 21 via une rondelle annulaire 52.

Chaque deuxième dispositif de fixation vertical 50 comprend en outre un manchon cylindrique creux 53 ayant un diamètre intérieur supérieur au diamètre extérieur de la vis 51. Le manchon cylindrique 53 est placé à l'intérieur de la traverse arrière 27 et comprend une première extrémité 53a, soudée par une soudure de manchon 54 sur la bride inférieure de la traverse arrière 27 et une deuxième extrémité 53b, opposée à la première extrémité 53a, en contact axial avec le plancher central 21.

Chaque deuxième dispositif de fixation vertical 50 comprend en outre un écrou 55 ayant un corps cylindrique 55a s'étendant dans la direction verticale Z et une jupe annulaire 55b s'étendant dans une direction Y perpendiculaire à la direction Z du corps cylindrique 55a. La jupe annulaire 55b est soudée par une soudure d'écrou 56 sur la carrosserie 30. L'alésage interne 55c de l'écrou est fileté afin de coopérer avec les filets 51b de la vis 51. Comme représenté, un élément d'étanchéité 57, par exemple en matériau élastique comme du caoutchouc, est placé entre la carrosserie 30 et le châssis 20. Les deuxièmes dispositifs de fixation verticaux 50 agissent comme un moyen de positionnement du châssis 20 par rapport à la carrosserie 30 dans la direction verticale Z à l'arrière du véhicule.

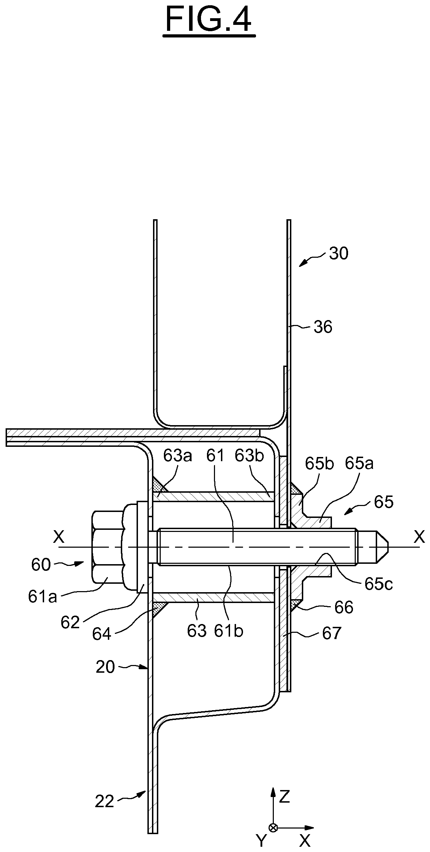

Comme illustré sur la figure 4, la vue détaillée montre une vue en coupe devant le tablier 22, 36 ou panneau de plancher avant séparant le compartiment moteur de l'habitacle du véhicule.

Une pluralité de dispositifs de fixation longitudinaux 60 représentés sur la figure 4 s'étendent dans la direction longitudinale X et comprennent chacun une vis 61 ayant une tête 61a et un filet externe 61b sur sa surface cylindrique. La vis 61 est insérée dans des trous (non référencés) pratiqués dans la paroi avant 36 de la carrosserie 30 et dans le panneau avant de plancher central du châssis 20 de telle manière que la tête de vis 61a repose sur le panneau avant de plancher central 22 via une rondelle annulaire 62.

Chaque dispositif de fixation longitudinal 60 comprend en outre un manchon cylindrique creux 63 ayant un diamètre intérieur supérieur au diamètre extérieur de la vis 61. Le manchon cylindrique 63 est placé à l'intérieur du panneau avant de plancher central 22 et comprend une première extrémité 63a, soudée par une soudure de manchon 64 sur la bride avant du panneau avant de plancher central 22 et une deuxième extrémité 63b, opposée à la première extrémité 63a, en contact axial avec la bride arrière du panneau avant de plancher central 22.

Chaque dispositif de fixation longitudinal 60 comprend en outre un écrou 65 ayant un corps cylindrique 65a s'étendant dans la direction verticale X et une jupe annulaire 65b s'étendant dans une direction Z perpendiculaire à la direction X du corps cylindrique 65a. La jupe annulaire 65b est soudée par une soudure d'écrou 66 sur la carrosserie 30. L'alésage interne 65c de l'écrou 65 est fileté afin de coopérer avec les filets 61b de la vis 61. Comme représenté, un élément d'étanchéité 67, par exemple en matériau élastique comme du caoutchouc, est placé entre la carrosserie 30 et le châssis 20. Les dispositifs de fixation longitudinaux 60 agissent comme un moyen de positionnement du châssis 20 par rapport à la carrosserie 30 dans la direction longitudinale X à l'avant du véhicule.

Les manchons cylindriques 43, 53, 63 décrits dans tous les modes de réalisation qui précèdent sont faits d'un matériau métallique. La position des manchons cylindriques 43, 53, 63 entre la tête de vis 41a, 51a, 61a et l'écrou 45, 55, 65 fait qu'ils agissent comme une entretoise adaptée pour transférer de façon régulière la charge, du châssis 20 vers la carrosserie 30, en cas de collision transversale et/ou longitudinale du véhicule avec un élément extérieur au véhicule et pour limiter la compression des panneaux de plancher.

Grâce à l'invention, les dispositifs de fixation font office de moyen de positionnement du châssis par rapport à la carrosserie dans la direction verticale Z et dans la direction longitudinale X.

En outre, grâce à la structure spécifique des dispositifs de fixation, la carrosserie peut être facilement montée et démontée sur n'importe quel châssis de véhicule standard.

## Revendications

1. Véhicule automobile (10) comprenant un châssis (20), une carrosserie (30), une pluralité de premiers dispositifs de fixation verticaux (40), s'étendant dans une direction verticale (Z) perpendiculaire à la direction longitudinale (X) du véhicule, pour connecter la carrosserie (30) au châssis (20) sur les côtés du véhicule (10), une pluralité de deuxièmes dispositifs de fixation verticaux (50), s'étendant dans une direction verticale (Z) perpendiculaire à la direction longitudinale (X) du véhicule, pour connecter la carrosserie (30) au châssis (20) à l'arrière du véhicule (10) le véhicule étant **caractérisé en ce qu'**il comprend une pluralité de dispositifs de fixation longitudinaux (60), s'étendant dans la direction longitudinale (X) du véhicule, pour connecter la carrosserie (30) au châssis (20) à l'avant du véhicule (10).

2. Véhicule automobile selon la revendication 1, dans lequel chaque dispositif de fixation (40, 50, 60) comprend une vis (41, 51, 61) ayant une tête de vis (41a, 51a, 61a) adaptée pour reposer sur le châssis (20), un écrou (45, 55, 65) coopérant avec la vis (41, 51, 61) et adapté pour reposer sur la carrosserie (30) et un manchon cylindrique creux (43, 53, 63) à l'intérieur duquel est insérée la vis (41, 51, 61) et situé entre la tête de vis (41a, 51a, 61a) et l'écrou (45, 55, 65).

3. Véhicule automobile selon la revendication 2, dans lequel au moins une extrémité (43a, 53a, 63a) du manchon cylindrique creux (43, 53, 63) est fixée au châssis (20) du véhicule.

4. Véhicule automobile selon la revendication 3, dans lequel le manchon cylindrique creux (43, 53, 63) est fixé au châssis (20) du véhicule par une soudure de manchon (44, 54, 64).

5. Véhicule automobile selon l'une quelconque des revendications précédentes, dans lequel l'écrou (45, 55, 65) est fixé à la carrosserie (30).

6. Véhicule automobile selon la revendication 5, dans lequel l'écrou (45, 55, 65) est fixé à la carrosserie (30) par une soudure d'écrou (46, 56, 66).

7. Véhicule automobile selon l'une quelconque des revendications 2, 3 ou 4, dans lequel le châssis (20) du véhicule comprend un panneau de plancher central (21) s'étendant dans la direction longitudinale (X) du véhicule et délimité par deux longerons latéraux (25a, 25b) et des traverses avant et arrière (26, 27) s'étendant transversalement entre les longerons (25a, 25b) et un panneau avant de plancher central (22) s'étendant depuis le panneau de plancher central (21) dans une direction substantiellement inclinée.

8. Véhicule automobile selon la revendication 7, dans lequel le manchon cylindrique (43) de chaque premier dispositif de fixation vertical (40) est placé à l'intérieur de chaque longeron latéral (25a, 25b) du châssis (20).

9. Véhicule automobile selon la revendication 7 ou 8, dans lequel le manchon cylindrique (53) de chaque deuxième dispositif de fixation vertical (50) est placé à l'intérieur de chaque traverse arrière (27) du châssis (20).

10. Véhicule automobile selon l'une quelconque des revendications 7 à 9, dans lequel le manchon cylindrique (65) de chaque dispositif de fixation longitudinal (60) est placé à l'intérieur du panneau avant de plancher central (22) du châssis (20).

11. Véhicule automobile selon l'une quelconque des revendications précédentes, comprenant un élément d'étanchéité (47) placé entre la carrosserie (30) et le châssis (20).

12. Véhicule automobile selon l'une quelconque des revendications 2-4 et 7-10, dans lequel les manchons cylindriques (43, 53, 63) sont faits d'un matériau métallique.

## Patentansprüche

1. Kraftfahrzeug (10), das ein Fahrgestell (20), eine Karosserie (30), eine Vielzahl erster senkrechter Befestigungsvorrichtungen (40), die sich in einer senkrechten Richtung (Z) lotrecht zur Längsrichtung (X) des Fahrzeugs erstrecken, um die Karosserie (30) auf den Seiten des Fahrzeugs (10) mit dem Fahrgestell (20) zu verbinden, und eine Vielzahl zweiter senkrechter Befestigungsvorrichtungen (50) enthält, die sich in einer senkrechten Richtung (Z) lotrecht zur Längsrichtung (X) des Fahrzeugs erstrecken, um die Karosserie (30) an der Rückseite des Fahrzeugs (10) mit dem Fahrgestell (20) zu verbinden, wobei das Fahrzeug **dadurch gekennzeichnet ist, dass** es eine Vielzahl von Längsbefestigungsvorrichtungen (60) enthält, die sich in der Längsrichtung (X) des Fahrzeugs erstrecken, um die Karosserie (30) an der Vorderseite des Fahrzeugs (10) am Fahrgestell (20) zu befestigen.

2. Kraftfahrzeug nach Anspruch 1, wobei jede Befestigungsvorrichtung (40, 50, 60) eine Schraube (41, 51, 61), die einen Schraubenkopf (41a, 51a, 61a) hat, der geeignet ist, auf dem Fahrgestell (20) aufzuliegen, eine Mutter (45, 55, 65), die mit der Schraube (41, 51, 61) zusammenwirkt und geeignet ist, auf der Karosserie (30) aufzuliegen, und eine hohle zylindrische Muffe (43, 53, 63) enthält, in deren Inneres die Schraube (41, 51, 61) eingeführt ist und die sich zwischen dem Schraubenkopf (41a, 51a, 61a) und der Mutter (45, 55, 65) befindet.

3. Kraftfahrzeug nach Anspruch 2, wobei mindestens ein Ende (43a, 53a, 63a) der hohlen zylindrischen Muffe (43, 53, 63) am Fahrgestell (20) des Fahrzeugs befestigt ist.

4. Kraftfahrzeug nach Anspruch 3, wobei die hohle zylindrische Muffe (43, 53, 63) des Fahrzeugs durch eine Muffenschweißnaht (44, 54, 64) am Fahrgestell (20) befestigt ist.

5. Kraftfahrzeug nach einem der vorhergehenden Ansprüche, wobei die Mutter (45, 55, 65) an der Karosserie (30) befestigt ist.

6. Kraftfahrzeug nach Anspruch 5, wobei die Mutter (45, 55, 65) durch eine Mutterschweißnaht (46, 56, 66) an der Karosserie (30) befestigt ist.

7. Kraftfahrzeug nach einem der Ansprüche 2, 3 oder 4, wobei das Fahrgestell (20) des Fahrzeugs eine mittlere Bodenplatte (21), die sich in der Längsrichtung (X) des Fahrzeugs erstreckt und von zwei seitlichen Längsträgern (25a, 25b) und vorderen und hinteren Querträgern (26, 27) begrenzt wird, die sich quer zwischen den Längsträgern (25a, 25b) erstrecken, und eine vordere mittlere Bodenplatte (22) enthält, die sich von der mittleren Bodenplatte (21) in einer im Wesentlichen geneigten Richtung erstreckt.

8. Kraftfahrzeug nach Anspruch 7, wobei die zylindrische Muffe (43) jeder ersten senkrechten Befestigungsvorrichtung (40) innerhalb jedes seitlichen Längsträgers (25a, 25b) des Fahrgestells (20) angeordnet ist.

9. Kraftfahrzeug nach Anspruch 7 oder 8, wobei die zylindrische Muffe (53) jeder zweiten senkrechten Befestigungsvorrichtung (50) innerhalb jedes hinteren Querträgers (27) des Fahrgestells (20) angeordnet ist.

10. Kraftfahrzeug nach einem der Ansprüche 7 bis 9, wobei die zylindrische Muffe (65) jeder Längsbefestigungsvorrichtung (60) im Inneren der vorderen mittleren Bodenplatte (22) des Fahrgestells (20) angeordnet ist.

11. Kraftfahrzeug nach einem der vorhergehenden Ansprüche, das ein Dichtungselement (47) enthält, das zwischen der Karosserie (30) und dem Fahrgestell (20) angeordnet ist.

12. Kraftfahrzeug nach einem der Ansprüche 2-4 und 7-10, wobei die zylindrischen Muffen (43, 53, 63) aus einem metallischen Material hergestellt sind.

## Claims

1. Motor vehicle (10) comprising a chassis (20), a body (30), a plurality of first vertical fastening devices (40) extending in a vertical direction (Z) perpendicular to the longitudinal direction (X) of the vehicle in order to connect the body (30) to the chassis (20) on the sides of the vehicle (10), and a plurality of second vertical fastening devices (50) extending in a vertical direction (Z) perpendicular to the longitudinal direction (X) of the vehicle in order to connect the body (30) to the chassis (20) at the rear of the vehicle (10), the vehicle being **characterized in that** it comprises a plurality of longitudinal fastening devices (60) extending in the longitudinal direction (X) of the vehicle in order to connect the body (30) to the chassis (20) at the front of the vehicle (10).

2. Motor vehicle according to Claim 1, in which each fastening device (40, 50, 60) comprises a screw (41, 51, 61) having a screw head (41a, 51a, 61a) adapted to rest on the chassis (20), a nut (45, 55, 65) cooperating with the screw (41, 51, 61) and adapted to rest on the body (30), and a hollow cylindrical sleeve (43, 53, 63) within which the screw (41, 51, 61) is inserted and which is situated between the screw head (41a, 51a, 61a) and the nut (45, 55, 65).

3. Motor vehicle according to Claim 2, in which at least one end (43a, 53a, 63a) of the hollow cylindrical sleeve (43, 53, 63) is fastened to the chassis (20) of the vehicle.

4. Motor vehicle according to Claim 3, in which the hollow cylindrical sleeve (43, 53, 63) is fastened to the chassis (20) of the vehicle by a sleeve weld (44, 54, 64) .

5. Motor vehicle according to any one of the preceding claims, in which the nut (45, 55, 65) is fastened to the body (30).

6. Motor vehicle according to Claim 5, in which the nut (45, 55, 65) is fastened to the body (30) by a nut weld (46, 56, 66).

7. Motor vehicle according to any one of Claims 2, 3 and 4, in which the chassis (20) of the vehicle comprises a central floor panel (21) extending in the longitudinal direction (X) of the vehicle and delimited by two lateral longitudinal members (25a, 25b) and front and rear crossmembers (26, 27) extending transversally between the longitudinal members (25a, 25b), and a front central floor panel (22) extending from the central floor panel (21) in a substantially inclined direction.

8. Motor vehicle according to Claim 7, in which the cylindrical sleeve (43) of each first vertical fastening device (40) is placed within each lateral longitudinal member (25a, 25b) of the chassis (20).

9. Motor vehicle according to Claim 7 or 8, in which the cylindrical sleeve (53) of each second vertical fastening device (50) is placed within each rear crossmember (27) of the chassis (20).

10. Motor vehicle according to any one of Claims 7 to 9, in which the cylindrical sleeve (65) of each longitudinal fastening device (60) is placed within the front central floor panel (22) of the chassis (20).

11. Motor vehicle according to any one of the preceding claims, comprising a sealing element (47) placed between the body (30) and the chassis (20).

12. Motor vehicle according to any one of Claims 2-4 and 7-10, in which the cylindrical sleeves (43, 53, 63) are made of a metallic material.
